# EUROPÄISCHE PATENTSCHRIFT

(11) **EP 1 410 714 B1**
(45) Veröffentlichungstag und Bekanntmachung des Hinweises auf die Patenterteilung: **23.08.2006**
(21) Anmeldenummer: 03023230.0
(22) Anmeldetag: 14.10.2003
(51) Int. Cl.: A01N 43/653

(54) **Fungizide Wirkstoffkombinationen**
Fungicidal mixtures
Mélanges fongicides

(30) Priorität: 17.10.2002 DE 10248335
(43) Veröffentlichungstag der Anmeldung: 21.04.2004
(73) Patentinhaber: LANXESS Deutschland GmbH, 51369 Leverkusen (DE)
(72) Erfinder: Bruns, Rainer, Dr., 51373 Leverkusen (DE); Kugler, Martin, Dr., 42799 Leichlingen (DE); Jaetsch, Thomas, Dr., 50670 Köln (DE)

(56) Entgegenhaltungen:
- EP-A- 0 341 954
- EP-A- 0 603 845
- EP-A- 0 677 246
- DATABASE CA [Online] CHEMICAL ABSTRACTS SERVICE, COLUMBUS, OHIO, US; EGAWA, HITOSHI: "Wood preservative compositions containing strobilurins and preservation method" retrieved from STN Database accession no. 138:216834 XP002265078 & JP 2003 073211 A (SHINTO FINE CO., LTD., JAPAN) 12. März 2003 (2003-03-12)
- DATABASE CA [Online] CHEMICAL ABSTRACTS SERVICE, COLUMBUS, OHIO, US; EGAWA, HITOSHI: "Industrial antimicrobial composition containing mixed active agents" retrieved from STN Database accession no. 138:267170 XP002265079 & JP 2003 095829 A (SHINTO FINE CO., LTD., JAPAN) 3. April 2003 (2003-04-03)
- DATABASE CA [Online] CHEMICAL ABSTRACTS SERVICE, COLUMBUS, OHIO, US; INUI, KEIICHIRO ET AL: "Antimicrobial agents and insect repellents for wood preservation" retrieved from STN Database accession no. 139:192915 XP002265080 & JP 2003 252705 A (SHINTO FINE CO., LTD., JAPAN) 10. September 2003 (2003-09-10)
- DATABASE CA [Online] CHEMICAL ABSTRACTS SERVICE, COLUMBUS, OHIO, US; EGAWA, HITOSHI: "Industrial antimicrobial composition containing mixed active agents" retrieved from STN Database accession no. 138:267169 XP002265081 & JP 2003 095828 A (SHINTO FINE CO., LTD., JAPAN) 3. April 2003 (2003-04-03)

## Beschreibung

Die vorliegende Erfindung betrifft synergistische Wirkstoffmischungen enthaltend Ipconazol und mindestens einen weiteren fungiziden Wirkstoff, mikrobizide Mittel auf Basis dieser Wirkstoffmischung sowie die Verwendung von Wirkstoffmischungen und Mitteln zum Schutz von technischen Materialien.

Aus der Literatur ist bekannt, dass Ipconazol fungizide Eigenschaften besitzt und zum Schutz technischer Materialien verwendet werden kann (vgl. EP-A 341954).

Insbesondere zum Schutz von Holz und Holzverbundstoffen ist die antifungische Wirkung von Ipconazol jedoch nicht gegen alle Holzdestruenten ausreichend bzw. weist Lücken auf. Es bestand daher die Aufgabe, die Wirksamkeit von Ipconazol zum Schutz von technischen Materialien, insbesondere von Holz und Holzverbundstoffen zu verbessern.

Überraschenderweise wurde nun gefunden, dass Mischungen von Ipconazol mit bestimmten anderen Fungiziden eine bessere mikrobizide Wirksamkeit insbesondere gegen unerwünschte Holzdestruenten besitzen im Vergleich zu der Wirksamkeit der Summe der Einzelwirkstoffe.

Gegenstand der vorliegenden Erfindung sind neue Wirkstoffmischungen enthaltend
a) Ipconazol der Formel (I) 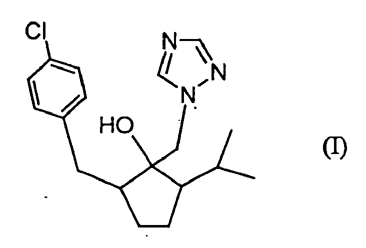 und
b) mindestens einen weiteren fungiziden Wirkstoff
aus der Reihe der Metallsalze oder Metalloxide, Sulfamide; Imidazole, Morpholinderivate, Benzthiazole, Isothiazolinone, Thiocyanate, quartären Ammoniumverbindungen und Guanidine, Iodderivate, Phenole, Pyridine, Methoxyacrylate, Chinoline und Triazole ausgewählt aus der Reihe Azaconazole, Bitertanol, Bromuconazole, Cyproconazole, Epoxyconazole, Fluquinconazole, Hexaconazole, Metconazole, Penconazole, Propioconazole, Tebuconazole, Tetraconazole oder Triadimenol sowie deren Metallsalze und Säureaddukte.

Wie aus der Formel (I) ersichtlich ist, können die Verbindung der Formel (I) in Form unterschiedlicher Stereoisomere vorliegen. Der Gegenstand der vorliegenden Erfindung umfasst daher sowohl Mischungen enthaltend die isomerenreinen oder isomerenangereichteren Verbindungen der Formel (I) als auch Mischungen enthaltend die enantiomerenreinen oder enatiomerenangereicherten Verbindungen der Formel (I) oder das Racemat der Formel (I).

Bevorzugte Mischungskomponenten b) aus der Reihe der Metallsalze und Oxide sind z.B. Salze der Metalle Kupfer und Zink, wie z.B. Kupferhydroxycarbonat, Kupfersulfat, Kupferchlorid, Kupferborat, Zinkfluorosilikat oder Oxide wie z.B.Oxide der Metalle Kupfer und Zink wie z.B. Cu₂O, CuO, ZnO.

Bevorzugte Mischungskomponenten b) aus der Reihe der Sulfamiden sind z.B. Dichlofluanid, Tolylfluanid oder Fluorfolpet.

Bevorzugte Mischungskomponenten b) aus der Reihe der Imidazole sind z.B. Clotrimazole, Climbazole, Imazalil, Ketoconazole oder Prochloraz sowie deren Metallsalze und Säureaddukte.

Bevorzugte Mischungskomponenten b) aus der Reihe der Morpholinderivate sind z.B. Dodemorph, Fenpropimorph, Tridemorph, und ihre arylsulfonsauren Salze, wie z.B. p-Toluolsulfonsäure und p-Dodecylphenyl-sulfonsäure.

Bevorzugte Mischungskomponenten b) aus der Reihe der Benzthiazole sind z.B. 2-Mercaptobenzothiazol und Benzthiophenen wie z.B. Benzo[b]thiophen-S,S-dioxidcarbonsäurecyclohexylamid oder Bethoxazin.

Bevorzugte Mischungskomponenten b) aus der Reihe der Isothiazolinone sind z.B. 4,5-Dichloro-N-octylisothiazolin-3-on, N-Octyl-isothiazolin-3-on oder Benzisothiazolinone.

Bevorzugte Mischungskomponenten b) aus der Reihe der Thiocyanate sind z.B. Thiocyanatomethylthiobenzothiazol oder Methylenbisthiocyanat.

Bevorzugte Mischungskomponenten b) aus der Reihe der quartären Ammoniumverbindungen und Guanidine sind z.B. Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethylammoniumchlorid, N-Hexadecyl-trimethyl-ammoniumchlorid, Didecyl-methylpoly(oxyethyl)-ammoniumpropionat.

Bevorzugte Mischungskomponenten b) aus der Reihe der Iodderivate sind z.B. Diiodmethyl-p-tolylsulfon oder 3-Iod-2-propinyl-n-butylcarbamat.

Bevorzugte Mischungskomponenten b) aus der Reihe der Phenole sind z.B. Tribromphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol und deren Alkali- und Erdalkalimetallsalze.

Bevorzugte Mischungskomponenten b) aus der Reihe der Pyridine sind z.B. 1-Hydroxy-2-pyridinthion (und ihre Cu-, Na-, Fe-, Mn-, Zn-Salze) oder Tetrachlor-4-methylsulfonylpyridin.

Bevorzugte Mischungskomponenten b) aus der Reihe der Methoxyacrylate sind z.B. Azoxystrobin oder Trifloxystrobin.

Bevorzugte Mischungskomponenten b) aus der Reihe der Chinoline sind z.B. Quinoxyfen, 8-Hydroxychinolin und deren Cu-Salze.

Besonders bevorzugt sind Mischungen von a) Ipconazole der Formel (I) mit b) mindestens einem Wirkstoff aus der Reihe:
Azaconazole, Cyproconazole, Fluquinconazole, Hexaconazole, Propioconazole, Tebuconazole, Triadimenol, Climbazole, Imazalil, Prochloraz, Dichlofluanid, Tolylfluanid, Thiabendazole, Fenpropimorph, Tridemorph, Benzo[b]thiophen-S,S-dioxid-carbonsäurecyclohexylamid, Bethoxazin, Thiocyanatomethylthiobenzothiazol, Benzalkoniumchlorid, Didecyldimethylammoniumchlorid, Didecyl-methyl-poly(oxyethyl)-ammoniumpropionat, 3-Iod-2-propinyl-butylcarbamat, Trifloxystrobin.

Insbesondere bevorzugt sind Mischungen von a) Ipconazole der Formel (I) mit b) mindestens einem Wirkstoff aus der Reihe:
Cyproconazole, Fluquinconazole, Tebuconazole, Triadimenol, Prochloraz, Tolylfluanid, Bethoxazin, Benzalkoniumchlorid, Didecyldimethylammoniumchlorid, Didecylmethyl-poly(oxyethyl)-ammoniumpropionat, 3-Iod-2-propinyl-butylcarbamat.

Die Gewichtsverhältnisse der Wirkstoffe a) und b) in der erfindungsgemäßen Wirkstoffmischung können in einem relativ weiten Bereich variiert werden.

Wenn jedoch die Wirkstoffe a) und b) in den erfindungsgemäßen Wirkstoffinischungen in bestimmten Gewichtsverhältnissen vorhanden sind, zeigt sich der synergistische Effekt besonders deutlich. Gegenstand der vorliegenden Erfindung sind daher Wirkstoffmischungen enthaltend eine synergistisch wirksame Menge an a) Ipconazole der Formel (I) und eine synergistisch wirksame Menge an mindestens einem weiteren fungiziden Wirkstoff b). Bevorzugt sind Gewichtsverhältnisse des fungiziden Wirkstoffs b) zu a) Ipconazol von 1:20 bis 20:1, besonders bevorzugt von 1:4 bis 4:1.

Gegebenenfalls können die erfindungsgemäßen Mischungen zusätzlich noch einen oder mehrere der folgenden Wirkstoffe c) enthalten:

### Insektizide:

Acetamiprid, Allethrin, Alpha-cypermethrin, Beta-cyfluthrin, Bifenthrin, Bioallethrin, 4-Chlor-2-(2-chlor-2-methylpropyl)-5-[(6-iod-3-pyridinyl)methoxy]-3(2H)-pyridazinone (CAS-RN: 120955-77-3), Chlorfenapyr, Chlorpyrifos, Clothianidin, Cyfluthrin, Cyhalothrin, Cypermethrin, Deltamethrin, Ethofenprox, Fenoxycarb, Fipronil, Flufenoxuron, Hexaflumuron, Imidacloprid, Nitenpyram, Permethrin, Pyriproxifen, Silafluofen, Tebufenozide, Thiamethoxam, Tralomethrin, Triflumuron;

### Algizide:

Benzthiazuron, Cybutrin, Difenoxuron, Diuron, Dazomet, Ethoxyfen, Fluometuron, Methabenzthiazuron, Terbutryn.

Bevorzugt sind erfindungsgemäße Wirkstoffmischungen, die als weiteren Wirkstoff c) mindestens eines der folgenden Insektizide und/oder Algizide enthalten:
Alpha-cypermethrin, Bifenthrin, Chlorfenapyr, Clothianidin, Cyfluthrin, Cypermethrin, Deltamethrin, Fipronil, Imidacloprid, Permethrin, Cybutrin, Diuron, Terbutryn.

Insbesondere bevorzugt sind erfindungsgemäße Wirkstoffmischungen, die als weiteren Wirkstoff c) mindestens eines der folgenden Insektiziden enthalten:
Alpha-cypermethrin, Bifenthrin, Chlorfenapyr, Cypermethrin, Fipronil, Imidacloprid, Permethrin.

Die Wirkstoffe c) liegen in der erfindungsgemäßen Wirkstoffmischung im allgemeinen in einer Menge von 0,00001 Gew.-% bis 10 Gew.-%, bevorzugt 0,0001 Gew.-% bis 5 Gew.-% und besonders bevorzugt 0,001 Gew.-% bis 1 Gew.-% vor.

Die erfindungsgemäßen Wirkstoffmischungen können hergestellt werden, indem man die Einzelkomponenten a) und b) und gegebenenfalls c) gegebenenfalls unter Zugabe von Lösungsmitteln und Verarbeitungshilfsmitteln miteinander in üblicher Art und Weise vermischt.

Die erfindungsgemäßen Wirkstoffmischungen weisen eine starke mikrobizide Wirkung auf und können zur Bekämpfung von unerwünschten Mikroorganismen, wie z.B. Pilzen, Bakterien und Algen im Materialschutz eingesetzt werden. Bevorzugt werden die Wirkstoffkombinationen zur Bekämpfung unerwünschter Mikroorganismen im Holzschutz einsetzen.

Im Materialschutz lassen sich die erfindungsgemäßen Wirkstoffkombinationen zum Schutz von technischen Materialien gegen Befall und Zerstörung durch unerwünschte Mikroorganismen einsetzen.

Weiterer Gegenstand der vorliegenden Erfindung ist die Verwendung
einer Wirkstoffmischung enthaltend
a) Ipconazol der Formel (I) 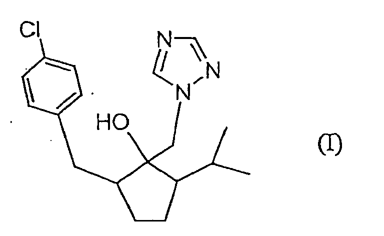 und
b) mindestens einen weiteren fungiziden Wirkstoff
aus der Reihe der Metallsalze oder Metalloxide, Sulfamide, Triazole, Imidazole, Benzimidazole, Morpholinderivate, Benzthiazole, Isothiazolinone, Thiocyanate, quartären Ammoniumverbindungen und Guanidine, Iodderivate, Phenole, Pyridine, Methoxyacrylate und Chinoline als Mikrobizid zum Schutz von technischen Materialien.

Bei den in den erfindungsgemäß zu verwendenden Wirkstoffmischungen bevorzugt enthaltenen fungiziden Wirkstoffen b) aus der Reihe der Metallsalze oder Metalloxide, Sulfamide, Imidazole, Morpholinderivate, Benzthiazole, Isothiazolinone, Thiocyanate, quartären Ammoniumverbindungen und Guanidine, Iodderivate, Phenole, Pyridine, Methoxyacrylate und Chinoline handelt es sich um die oben, für die erfindungsgemäßen Wirkstoffmischungen als bevorzugt aufgeführten Komponenten.

Für die erfindungsgemäß zu vervendenden Wirkstoffmischungen bevorzugte Mischungskomponenten b) aus der Reihe der Triazole sind z.B. Azaconazole, Bitertanol, Bromuconazole, Cyproconazole, Epoxyconazole, Fluquinconazole, Hexaconazole, Metconazole, Penconazole, Propioconazole, Tebuconazole, Tetraconazole oder Triadimenol sowie deren Metallsalze und Säureaddukte.

Bevorzugte Mischungskomponenten b) aus der Reihe der Benzimidazole sind z.B. Carbendazim oder Thiabendazole oder deren Salze.

Insbesondere bevorzugt ist die Verwendung von Mischungen von a) Ipconazole der Formel (I) mit b) mindestens einem Wirkstoff aus der Reihe:
Cyproconazole, Fluquinconazole, Tebuconazole, Triadimenol, Prochloraz, Tolylfluanid, Bethoxazin, Benzalkoniumchlorid, Didecyldimethylammoniumchlorid, Didecylmethyl-poly(oxyethyl)-ammoniumpropionat, 3-Iod-2-propinyl-butylcarbamat.

Die Gewichtsverhältnisse der Wirkstoffe a) und b) in der erfindungsgemäß zu verwendenden Wirkstoffmischung können in einem relativ weiten Bereich variiert werden.

Wenn jedoch die Wirkstoffe a) und b) in den erfindungsgemäß zu verwendenden Wirkstoffmischungen in bestimmten Gewichtsverhältnissen vorhanden sind, zeigt sich der synergistische Effekt besonders deutlich. Bevorzugt sind Gewichtsverhältnisse des fungiziden Wirkstoffs b) zu a) Ipconazol von 1:20 bis 20:1, besonders bevorzugt von 1:4 bis 4:1.

Gegebenenfalls können die erfindungsgemäß zu verwendenden Mischungen zusätzlich noch einen oder mehrere der oben genannten Wirkstoffe c) enthalten:
Unter technischen Materialien sind im vorliegenden Zusammenhang nichtlebende Materialien zu verstehen, die für die Verwendung in der Technik zubereitet worden sind. Beispielsweise handelt es sich bei den technischen Materialien um Klebstoffe, Leime, Papier und Karton, Textilien, Leder, Holz, Holzwerkstoffe, Anstrichmittel und Kunststoffartikel, Kühlschmierstoffe und andere Materialien, die von Mikroorganismen befallen oder zersetzt werden können. Weiterhin sind unter technischen Materialien im Rahmen der vorliegenden Erfindung auch Teile von Produktionsanlagen, beispielsweise Kühlwasserkreisläufe, zu verstehen, die durch Vermehrung von Mikroorganismen beeinträchtigt werden können. Bevorzugt zu schützende technische Materialien sind Klebstoffe, Leime, Papiere und Kartone, Leder, Holz, Holzwerkstoffe, Anstrichmittel, Kunststoffartikel, Kühlschmiermittel und Wärme-übertragungsflüssigkeiten.

Insbesondere eignen sich die erfindungsgemäßen Wirkstoffkombinationen zum Schutz von Holz, Holzwerkstoffen, Kunststoffen, Kühlschmiermitteln und Beschichtungssystemen wie Anstrichfarben, Lacken oder Putzen vor dem Befall durch Mikroorganismen. Ganz bevorzugt eignen sich die erfindungsgemäßen Wirkstoffkombinationen zum Schutz von Holz, Holzwerkstoffen, Kunststoffen und Beschichtungssystemen wie Anstrichfarben, Lacken oder Putzen vor dem Befall durch Mikroorganismen.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffkombinationen gegen Pilze, insbesondere Schimmelpilze, holzverfärbende und holzzerstörende Pilze (Basidiomyceten) und Insekten sowie gegen Schleimorganismen und Algen. Insbesondere bevorzugt ist die Wirkung der Wirkstoffkombinationen gegen holzzerstörende Pilze und Insekten.

Unter Holz, welches durch die erfindungsgemäßen Wirkstoffkombinationen bzw. diese enthaltenen Mittel geschützt werden kann, ist beispielhaft zu verstehen: Bauholz, Holzbalken, Eisenbahnschwellen, Brückenteile, Bootsstege, Holzfahrzeuge, Kisten, Paletten, Container, Telefonmasten, Holzverkleidungen, Holzfenster und -türen, Sperrholz, Spanplatten, Tischlerarbeiten oder Holzprodukte, die ganz allgemein beim Hausbau oder in der Bautischlerei Verwendung finden.

Ein besonders effektiver Holzschutz wird durch großtechnische Imprägnierverfahren, z.B. Vakuum, Doppelvakuum oder Druckverfahren erzielt.

Die beanspruchten synergistischen Kombinationen zeigen eine besonders hohe mikrobizide, insbesondere fungizide Wirkung, verbunden mit einem breiten Wirkspektrum gegen im Materialschutz relevante Mikroorganismen, sie sind vor allem wirksam gegen Schimmelpilze, holzverfärbende und holzzerstörende Pilze.

Beispielhaft - ohne jedoch zu limitieren - seien die folgenden Gruppen von Mikroorganismen genannt:
A: Holzverfärbende Pilze:
   A1: Ascomyceten
      Ceratocystis wie Ceratocystis minor
   A2: Deuteromyceten:
      Aspergillus wie Aspergillus niger
      Aureobasidium wie Aureobasidium pullulans
      Dactylium wie Dactylium fusarioides
      Penicillium wie Penicillium brevicaule oder
      Penicillium variabile
      Sclerophoma wie Sclerophoma pithyophila
      Scopularia wie Scopularia phycomyces
      Trichoderma wie Trichoderma viride oder
      Trichoderma lignorum
   A3: Zygomyceten:
      Mucor wie Mucor spinorus
Holzzerstörende Pilze:
   B1: Chaetomium wie Chaetomium globosum oder
      Chaetomium alba-arenulum
      Humicola grisea
      Petriella wie Petriella setifera
      Trichurus wie Trichurus spiralis
   B2: Basidiomyceten
      Coniophora wie Coniophora puteana
      Coriolus wie Coriolus versicolor
      Donkioporia wie Donkioporia expans
      Glenospora wie Glenospora graphii
      Gloeophyllum wie Gloeophyllum abietinum oder
      Gloeophyllum adoratum oder
      Gloeophyllum protactum oder
      Gloeophyllum sepiarium oder
      Gloeophyllum trabeum
      Lentinus wie Lentinus cyathiformes oder
      Lentinus edodes oder
      Lentinus lepideus oder
      Lentinus grinus oder
      Lentinus squarrolosus
      Paxillus wie Paxillus panuoides
      Pleurotus wie Pleurotus ostreatus
      Poria wie Poria monticola oder
      Poria placenta oder
      Poria vaillantii oder
      Poria vaporaria
      Serpula wie Serpula himantoides oder
      Serpula lacrymans
      Stereum wie Stereum hirsutum
      Tyromyces wie Tyromyces palustris

Die erfmdungsgemäßen Kombinationen eignen sich hervorragend zum Schutz von Holz und Holzwerkstoffen vor dem Befall durch holzzerstörende Insekten, wie beispielsweise

### 1. Käfer

Hylotrupes bajulus, Chlorophorus pilosis, Anabium punctatum, Xestobium rufovillosum, Ptilinus pecticornis, Dendrobium pertinex, Ernobius mollis, Priobium carpini, Lyctus brunneus, Lyctus africanus, Lyctus planicollis, Lyctus linearis, Lyctus pubescens, Trogoxylon aequale, Minthes rugicollis, Xyleborus spec., Tryptodendron spec., Apate monachus, Bostrychus capucins, Heterobostrychus brunneus, Sinoxylon spec., Dinoderus minutus

### 2. Hautflügler

Sirex juvencus, Urocerus gigas, Urocerus gigas taignus, Urocerus augur

### 3. Termiten

Kalotermes flavicollis, Cryptotermes brevis, Heterotermes indicola, Reticulitermes flavipes, Reticulitermes santonensis, Reticulitermes lucilugus, Mastotermes darwiniensis, Zootermopsis nevadensis, Coptotermes formosanus

Die Wirkstoffmischungen können in Abhängigkeit von ihren jeweiligen physikalischen und/oder chemischen Eigenschaften in die üblichen Formulierungen überführt werden, wie Lösungen, Emulsionen, Suspensionen, Pulver, Schäume, Pasten, Granulate, Aerosole und Feinstverkapselungen in polymeren Stoffen.

Diese Formulierungen können in bekannter Weise hergestellt werden, z.B. durch Vermischen der Wirkstoffmischung oder der Einzelwirkstoffe a) und b) und gegebenenfalls c) mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffmischung, vorzugsweise zwischen 0,5 und 25 Gew.-%.

Gegenstand der vorliegenden Erfindung sind weiterhin mikrobizide Mittel auf Basis der erfindungsgemäßen Wirkstoffkombinationen enthaltend mindestens ein Lösungs- oder Verdünnungsmittel sowie gegebenenfalls Verarbeitungshilfsmittel und gegebenenfalls weitere antimikrobiell wirksame Stoffe.

Die zum Schutz der technischen Materialien verwendeten mikrobiziden Mittel oder Konzentrate enthalten die erfindungsgemäße Wirkstoffmischung in einer Konzentration von 0,01 bis 95 Gew.-%, insbesondere 0,1 bis 25 Gew.-%.

Die Anwendungskonzentrationen der erfindungsgemäß zu verwendenden Wirkstoffmischung richtet sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,01 bis 1,5 Gew.-%, bezogen auf das zu schützende Material.

Die erfindungsgemäßen Wirkstoffmischungen bzw. Mittel zeichnen sich durch eine verbesserte mikrobizide Wirksamkeit gegenüber den aus dem Stand der Technik bekannten mikrobiziden Mitteln aus. Sie besitzen weiterhin eine gute Stabilität und verfügen in vorteilhafter Weise über ein breites Wirkungsspektrum.

Die Wirkstoffmischungen können als solche, in Form ihrer Formulierungen oder den daraus bereiteten Anwendungsformen, wie gebrauchsfertige Lösungen, Suspensionen, Pasten, lösliche Pulver angewendet werden. Die Anwendung geschieht in üblicher Weise, z.B. durch Sprüh-, Streich-, Tauch- und großtechnische Imprägnierverfahren, z.B. Vakuum-, Doppelvakuum- oder Druckverfahren.

## Patentansprüche

1. Wirkstoffmischung enthaltend
a) Ipconazol der Formel (I) 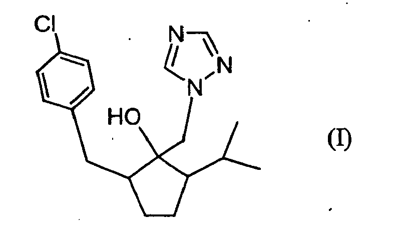 und
b) mindestens einen weiteren fungiziden Wirkstoff
aus der Reihe der Metallsalze oder Metalloxide, Sulfamide, Imidazole, Morpholinderivate, Benzthiazole, Isothiazolinone, Thiocyanate, quartären Ammoniumverbindungen und Guanidine, Iodderivate, Phenole, Pyridine, Methoxyacrylate, Chinoline, und Triazole ausgewählt aus der Reihe Azaconazole, Bitertanol, Bromuconazole, Cyproconazole, Epoxyconazole, Fluquinconazole, Hexaconazole, Metconazole, Penconazole, Propioconazole, Tebuconazole, Tetraconazole oder Triadimenol sowie deren Metallsalze und Säureaddukte.

2. Wirkstoffmischung gemäß Anspruch 1, **dadurch gekennzeichnet, dass** das Gewichtsverhältnis des fungiziden Wirkstoffs b) zu Ipconazol a) 1:20 bis 20:1 beträgt.

3. Wirkstoffmischung gemäß wenigstens einem der Ansprüche 1 und 2, **dadurch gekennzeichnet, dass** mindestens ein weiterer Wirkstoff c) aus der Reihe der Insektizide und/oder Algizide enthalten ist.

4. Verwendung einer Wirkstoffmischung enthaltend
a) Ipconazol der Formel (I) 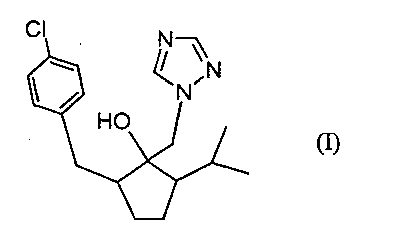 und
b) mindestens einen weiteren fungiziden Wirkstoff
aus der Reihe der Metallsalze oder Metalloxide, Sulfamide, Triazole, Imidazole, Benzimidazole, Morpholinderivate, Benzthiazole, Isothiazolinone, Thiocyanate, quartären Ammoniumverbindungen und Guanidine, Iodderivate, Phenole, Pyridine, Methoxyacrylate und Chinoline als Mikrobizid zum Schutz von technischen Materialien.

5. Verwendung gemäß Anspruch 4, **dadurch gekennzeichnet, dass** es sich bei den technischen Materialien um Holz, Holzwerkstoffe, Kunststoffe, Kühlschmiermittel und Beschichtungssysteme wie Anstrichfarben, Lacke oder Putze handelt.

6. Verfahren zum Schutz von technischen Materialien vor Befall und/oder Zerstörung durch Mikroorganismen, **dadurch gekennzeichnet, dass** man eine
Wirkstoffmischung enthaltend
a) Ipconazol der Formel (I) 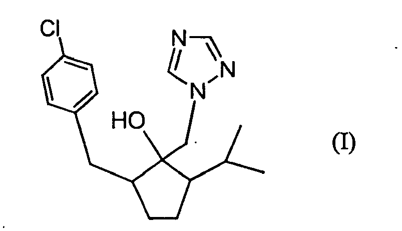 und
b) mindestens einen weiteren fungiziden Wirkstoff
aus der Reihe der Metallsalze oder Metalloxide, Sulfamide, Triazole, Imidazole, Benzimidazole, Morpholinderivate, Benzthiazole, Isothiazolinone, Thiocyanate, quartären Ammoniumverbindungen und Guanidine, Iodderivate, Phenole, Pyridine, Methoxyacrylate und Chinoline den Mikroorganismus oder dessen Lebensraum einwirken lässt.

7. Mikrobizides Mittel enthaltend
a) Ipconazol der Formel (I) 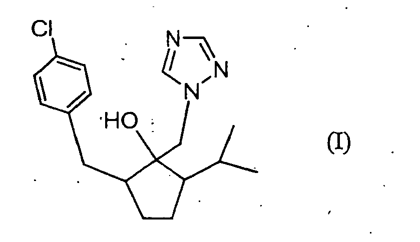 und
b) mindestens einen weiteren fungiziden Wirkstoff
aus der Reihe der Metallsalze oder Metalloxide, Sulfamide, Imidazole, Morpholinderivate, Benzthiazole, Isothiazolinone, Thiocyanate, quartären Ammoniumverbindungen und Guanidine, Iodderivate, Phenole, Pyridine, Methoxyacrylate, Chinoline und Triazole ausgewählt aus der Reihe Azaconazole, Bitertanol, Bromuconazole, Cyproconazole, Epoxyconazole, Fluquinconazole, Hexaconazole, Metconazole, Penconazole, Propioconazole, Tebuconazole, Tetraconazole oder Triadimenol sowie deren Metallsalze und Säureaddukte und mindestens ein Lösungs- oder Verdünnungsmittel sowie gegebenenfalls Verarbeitungshilfsmittel und gegebenenfalls weitere antimikrobiell wirksame Stoffe.

8. Mittel gemäß Anspruch 7, **dadurch gekennzeichnet, dass** mindestens eine weitere antimikrobiell wirksame Verbindung aus der Reihe der Algizide und/oder Insektizide enthalten ist.

9. Technische Materialien enthaltend
a) Ipconazol der Formel (I) 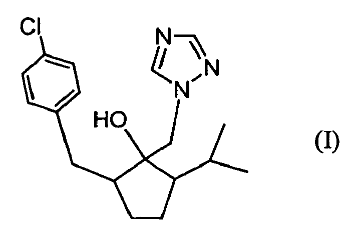 und
b) mindestens einen weiteren fungiziden Wirkstoff
aus der Reihe der Metallsalze oder Metalloxide, Sulfamide, Triazole, Imidazole, Benzimidazole, Morpholinderivate, Benzthiazole, Isothiazolinone, Thiocyanate, quartären Ammoniumverbindungen und Guanidine, Iodderivate, Phenole, Pyridine, Methoxyacrylate und Chinoline.

## Claims

1. Active compound mixture, comprising
a) ipconazole of the formula (I) 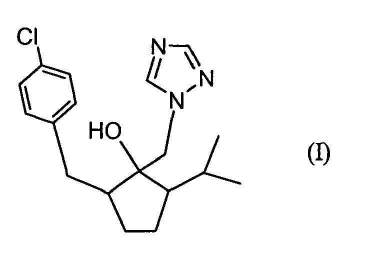 and
b) at least one further fungicidally active compound from the group of the metal salts or metal oxides, sulphamides, imidazoles, morpholine derivatives, benzothiazoles, isothiazolinones, thiocyanates, quaternary ammonium compounds and guanidines, iodine derivatives, phenols, pyridines, methoxyacrylates, quinolines, and triazoles selected from the group of azaconazoles, bitertanol, bromuconazole, cyproconazole, epoxyconazole, fluquinconazole, hexaconazole, metconazole, penconazole, propioconazole, tebuconazole, tetraconazole or triadimenol and their metal salts and acid adducts.

2. Active compound mixture according to Claim 1, **characterized in that** the weight ratio of the fungicidally active compound b) to ipconazole a) is from 1:20 to 20:1.

3. Active compound mixture according to at least one of Claims 1 and 2, **characterized in that** it comprises at least one further active compound c) from the group of the insecticides and/or algicides.

4. Use of an active compound mixture, comprising
a) ipconazole of the formula (I) 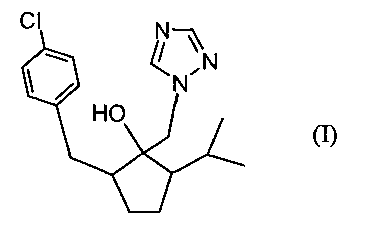 and
b) at least one further fungicidally active compound
from the group of the metal salts or metal oxides, sulphamides, triazoles, imidazoles, benzimidazoles, morpholine derivatives, benzothiazoles, isothiazolinones, thiocyanates, quaternary ammonium compounds and guanidines, iodine derivatives, phenols, pyridines, methoxyacrylates and quinolines as a microbicide for protecting industrial materials.

5. Use according to Claim 4, **characterized in that** the industrial materials are wood, woodbased materials, plastics, cooling lubricants and coating systems, such as paints, varnishes or plaster.

6. Method for protecting industrial materials against colonization and/or destruction by microorganisms, **characterized in that** an active compound mixture
a) ipconazole of the formula (I) 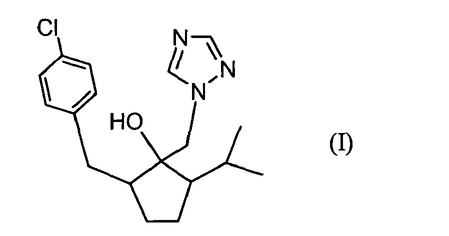 and
b) at least one further fungicidally active compound
from the group of the metal salts or metal oxides, sulphamides, triazoles, imidazoles, benzimidazoles, morpholine derivatives, benzothiazoles, isothiazolinones, thiocyanates, quaternary ammonium compounds and guanidines, iodine derivatives, phenols, pyridines, methoxyacrylates and quinolines
is allowed to act on the microorganism or its habitat.

7. Microbicidal composition, comprising
a) ipconazole of the formula (I) 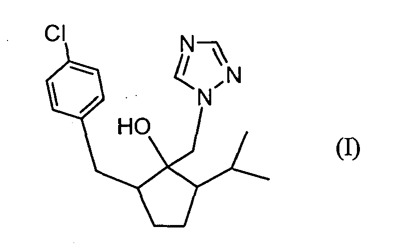 and
b) at least one further fungicidally active compound.
from the group of the metal salts or metal oxides, sulphamides, imidazoles, morpholine derivatives, benzothiazoles, isothiazolinones, thiocyanates, quaternary ammonium compounds and guanidines, iodine derivatives, phenols, pyridines, methoxyacrylates, quinolines and triazoles selected from the group of azaconazoles, bitertanol, bromuconazole, cyproconazole, epoxyconazole, fluquinconazole, hexaconazole, metconazole, penconazole, propioconazole, tebuconazole, tetraconazole or triadimenol and their metal salts and acid adducts and at least one solvent and/or diluent and also, if appropriate, processing auxiliaries and, if appropriate, further antimicrobially active compounds.

8. Composition according to Claim 7, **characterized in that** it comprises at least one further antimicrobially active compound from the group of the algicides and/or insecticides.

9. Industrial materials, comprising
a) ipconazole of the formula (I) 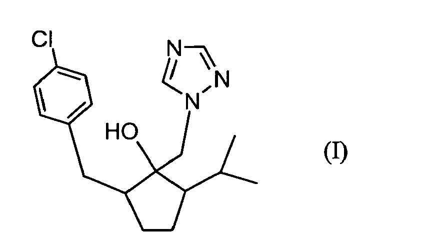 and
b) at least one further fungicidally active compound.

## Revendications

1. Mélange de substances actives contenant
a) de l'ipconazole de la formule (I) : 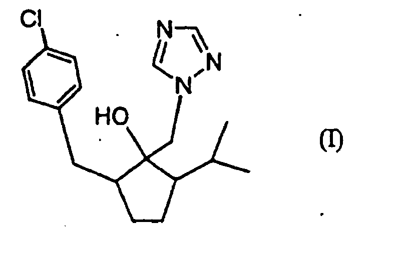 et
b) au moins une autre substance active fongicide de la série des sels métalliques ou oxydes métalliques, des sulfamides, des imidazoles, des dérivés de morpholine, des benzothiazoles, des isothiazolinones, des thiocyanates, des composés d'ammonium quaternaires et des guanidines, des dérivés d'iode, des phénols, des pyridines, des méthoxyacrylates, des quinoléines et des triazoles choisis parmi le groupe des azaconazoles, du bitertanol, des bromuconazoles, des cyproconazoles, des époxyconazoles, des fluquinconazoles, des hexaconazoles, des metconazoles, des penconazoles, des propioconazoles, des tébuconazoles, des tétraconazoles ou du triadiménol, ainsi que de leurs sels métalliques et produits d'addition d'acide.

2. Mélange de substances actives suivant la revendication 1, **caractérisé en ce que** le rapport pondéral entre la substance active fongicide b) et l'ipconazole a) est de 1:20 à 20:1.

3. Mélange de substances actives suivant au moins l'une des revendications 1 et 2, **caractérisé en ce qu'**au moins une autre substance active c) de la série des insecticides et/ou algicides est contenue.

4. Utilisation d'un mélange de substances actives contenant
a) de l'ipconazole de la formule (I) : 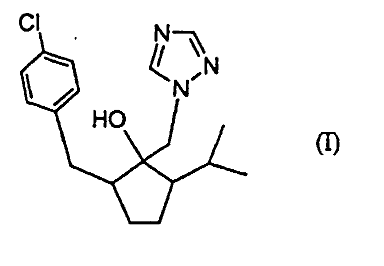 et
b) au moins une autre substance active fongicide de la série des sels métalliques ou oxydes métalliques, des sulfamides, des triazoles, des imidazoles, des benzimidazoles, des dérivés de morpholine, des benzothiazoles, des isothiazolinones, des thiocyanates, des composés d'ammonium quaternaires et des guanidines, des dérivés d'iode, des phénols, des pyridines, des méthoxyacrylates et des quinoléines, comme microbicide pour la protection de matériaux techniques.

5. Utilisation suivant la revendication 4, **caractérisée en ce que**, pour ce qui concerne les matériaux techniques, il s'agit de bois, de matériaux à base de bois, de substances synthétiques, de lubrifiants réfrigérants et de systèmes de recouvrement, tels que des peintures, des vernis ou des enduits.

6. Procédé de protection de matériaux techniques vis-à-vis d'une infection et/ou destruction par des micro-organismes, **caractérisé en ce qu'**on fait agir sur le micro-organisme ou son environnement un mélange de substances actives contenant
a) de l'ipconazole de la formule (I) : 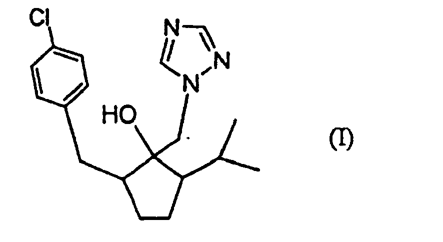 et
b) au moins une autre substance active fongicide de la série des sels métalliques ou oxydes métalliques, des sulfamides, des triazoles, des imidazoles, des benzimidazoles, des dérivés de morpholine, des benzothiazoles, des isothiazolinones, des thiocyanates, des composés d'ammonium quaternaires et des guanidines, des dérivés d'iode, des phénols, des pyridines, des méthoxyacrylates et des quinoléines.

7. Composition microbicide contenant
a) de l'ipconazole de la formule (I) : 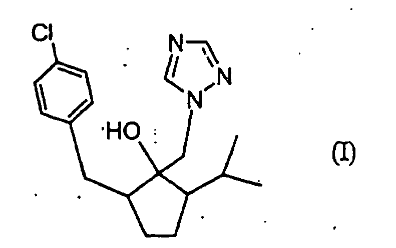 et
b) au moins une autre substance active fongicide de la série des sels métalliques ou oxydes métalliques, des sulfamides, des imidazoles, des dérivés de morpholine, des benzothiazoles, des isothiazolinones, des thiocyanates, des composés d'ammonium quaternaires et des guanidines, des dérivés d'iode, des phénols, des pyridines, des méthoxyacrylates, des quinoléines et des triazoles choisis parmi le groupe des azaconazoles, du bitertanol, des bromuconazoles, des cyproconazoles, des époxyconazoles, des fluquinconazoles, des hexaconazoles, des metconazoles, des penconazoles, des propioconazoles, des tébuconazoles, des tétraconazoles ou du triadiménol, ainsi que de leurs sels métalliques et produits d'addition d'acide, et au moins un solvant ou diluant ainsi qu'éventuellement un auxiliaire de traitement et éventuellement d'autres substances actives antimicrobiennes.

8. Composition suivant la revendication 7, **caractérisée en ce qu'**au moins un autre composé actif antimicrobien de la série des algicides et/ou des insecticides est contenu.

9. Matériaux techniques contenant
a) de l'ipconazole de la formule (I) : 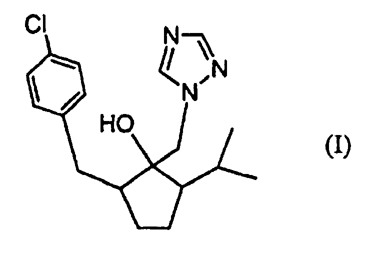 et
b) au moins une autre substance active fongicide de la série des sels métalliques ou oxydes métalliques, des sulfamides, des triazoles, des imidazoles, des benzimidazoles, des dérivés de morpholine, des benzothiazoles, des isothiazolinones, des thiocyanates, des composés d'ammonium quaternaires et des guanidines, des dérivés d'iode, des phénols, des pyridines, des méthoxyacrylates et des quinoléines.
